# EUROPEAN PATENT APPLICATION

(11) **EP 2 325 506 A2**
(43) Date of publication of application: **25.05.2011**
(21) Application number: 10169980.9
(22) Date of filing: 19.07.2010
(51) Int. Cl.: F16B 25/10, F16B 35/06

(54) **Flat head wood screw**

(30) Priority: 24.11.2009 ES 200930694 U
(71) Applicant: Celo Distribucion, S.A., 08211 Castellar del Valles (ES)
(72) Inventor: Ceravalls Pujol, Ramón, 08211 Castellar del Valles (ES); Lopez Puche, Núria, 08211 Castellar del Valles (ES)
(74) Representative: Ponti Sales, Adelaida

(57) **Abstract**

Lag screw (1) with countersunk head (2), characterized in that between 10 and 30% of the conical surface (2a) of the head comprises slits (2b), so that with this structure and surface proportion, the lag screw of the invention allows to extract, evacuate and countersink more easily a perfect drawing, even in compact woods such as DM.

## Description

The present invention relates to a lag screw for wood, which is constituted by a rod or cylindrical body provided at one end with a head with a housing to receive the tip of the screwdriver, and at the opposite end with a tapered threaded end tip for fixing woods or fittings to woods.

### BACKGROUND OF THE INVENTION

Lag screws for assembling woods are known, which include grooves or projections in the conical surface of the head which mill the wood and facilitate the drawing of the head.

However, for the assembly of the fitting on wood, for example, a hinge, the screw should not include grooves, because when they touch the head with the countersunk part of the metal they can damage the hinge, and when a sudden stop is done they can damage the tool and/or the wrist of the operator.

To solve this problem is already known, especially from European patent validation ES2254856, a lag screw head with a flat groove that allows the wood to be countersunk and also to be seated in the fitting. This flat groove is a 60% of screw flat surface.

However, even though it provides a better milling, this solution still has the following drawbacks:
- The introduction of the screw in the wood is always done with a small angle with respect to the perpendicular plane of the wood, and therefore of the fitting (the screw is not inserted straight). This makes the support of the screw head to be on a half of the fitting. As the groove flat is only 60% of the surface of the screw, the effective support on the fitting is about 30% of the surface of the screw, which generates a high compression pressure in the contact zone which can damage the fitting.
- The extraction of wood (milling) is carried out in four points, and in some cases this involves a relatively large amount of material that is difficult to compress inwardly in the wood, as is desirable. In cases such as formica, the hardest zone can even be "peeled". The truth is that most of screws incorporating grooves are preferably made with a number of grooves greater than four, usually six, for a more progressive countersink.

Therefore, the applicant considers essential to have a lag screw that gives solution to the aforementioned prior art drawbacks.

### DESCRIPTION OF THE INVENTION

To this end, this invention proposes a countersunk head lag screw, which is characterized in that between 10 and 30% of the conical surface of the head comprises slits.

With this structure and proportion of surfaces, the lag screw of the invention allows to extract, evacuate and countersink more easily a perfect drawing, even in compact woods such as DM.

It can also be used as a normal countersunk head screw, especially for its use on metal surfaces.

Preferably, between 15 and 25% of the conical surface of the head comprises slits, and more preferably 20% of the conical surface of the head comprises slits.

Advantageously, the slits are distributed radially equi-spaced.

Even more advantageously, these slits are 4 and are V-shaped, so that each slit provides two milling edges, so that, on one hand, 8 milling edges are achieved and, on the other hand, four chip evacuation edges of the milling edges are achieved.

Finally, according other optional features of the invention:
- the transition between the conical surface and the threaded rod is a second conical surface.
- the V-shaped slits extend from the smaller circle of the conical surface and at less than 1 mm of the greater circle.
- the conical surface has an aperture of 90 + 2°.

### BRIEF DESCRIPTION OF THE DRAWINGS

For better understanding of the previous description, some drawings are attached in which, diagrammatically and only as a non-limitative example, an embodiment of the lag screw of the invention is shown.
Figure 1 is a perspective view of the head of the lag screw of the invention.
Figure 2 is a detailed view of a slit/engraving in which the two milling edges of each slit/engraving are shown.
Figure 3 is a scale view from the lag screw axis in which shows the distribution of the slits.
Figure 4 is a scale side view of the lag screw of the invention.

### DESCRIPTION OF A PREFERRED EMBODIMENT

Throughout the following description, the terms slit and engraving are used interchangeably.

As shown in the figures, the invention refers to a lag screw 1 with a countersunk head 2, in which approximately 20% of the conical surface 2a of the head comprises slits 2b.

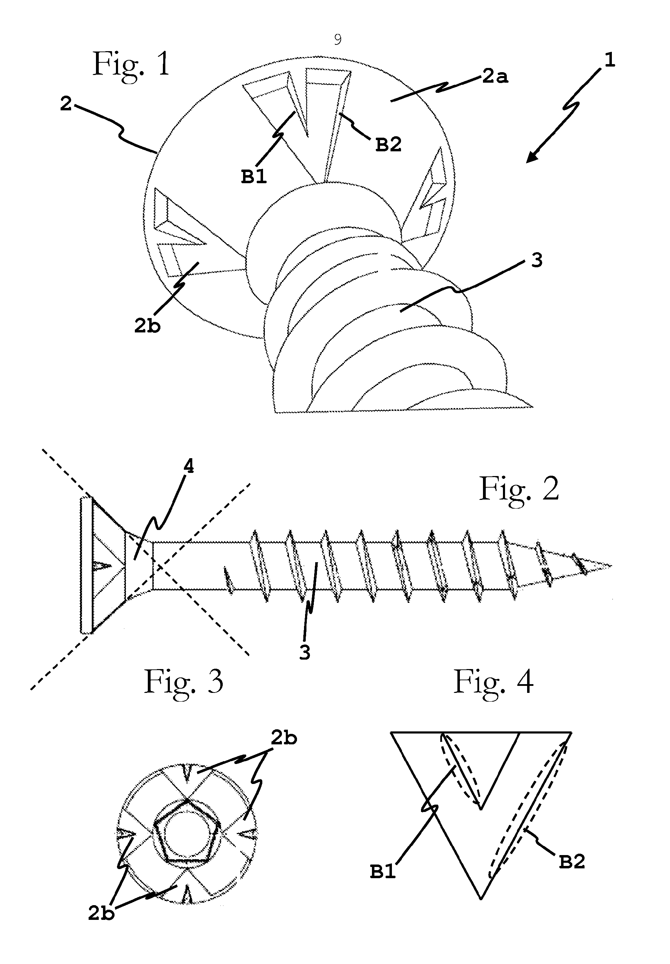

According to this preferred embodiment, the slits 2b are arranged radially equi-spaced, they are 4 and they are V-shaped, so that each slit 2b provides two milling edges B1, B2, as shown in detail in figure 2.

As shown in Figure 4, the transition between the conical surface 2a and the threaded rod 3 is a second conical surface 4, which allows a smooth transition during the tightening phase, as well as stress zones with lower angles and lower possibilities of crack propagation.

As seen in Figures 1, 3 and 4, the V-shaped slits 2b extend between the smaller circle of the conical surface 2a and at less than 1 mm of the maximum circle.

With this lag screw the wood milling action is improved, because instead of 4 milling points 8 V-shaped milling points are achieved, and the wood is milled with no projection on the head.

It also allows its use in fittings. The lag screws are never inserted straight, and for this reason the support of the head with the fitting is not complete. The base of the head 2 of this lag screw improves its support in the hinge and increases the support surface, over 60%, ideally between 70% and 80%. As the engraving 2b is depressed, the contact with fitting is avoided, and therefore also the problem of damaging the hinge, hand or tool.

The engraving 2b includes a V that allows the screw to stop when it touches the metal and avoids the thread passage, common problem on screws or lag screws that fix metal on wood.

It also includes a lower case V that is designed to facilitate the disposal or removal of the chip, permitting a quicker insertion of the head and, at the same time, allows the chip not removed to be perfectly pressed within these slits 2b avoiding the "mushroom", which is the formation of a compact chip crown around the head once the screw is threaded directly into the wood.

All this makes this slit (engraving) something unusual, unique and of special interest to the carpenter, which serves both to attach fittings and to assemble.

## Claims

1. Lag screw (1) with countersunk head (2), **characterized in that** between 10 and 30% of the conical surface (2a) of the head comprises slits (2b).

2. Lag screw (1) according to the previous claim, wherein between 15 and 25% of the conical surface (2a) of the head comprises slits (2b).

3. Lag screw (1) according to the previous claim, wherein 20% of the conical surface (2a) of the head comprises slits (2b).

4. Lag screw (1) according to any of the previous claims, wherein said slits (2b) are arranged radially equi-spaced.

5. Lag screw (1) according to any of the previous claims, wherein said grooves (2b) are 4 and they are V-shaped, so that each slit (2b) provides two milling edges (B1, B2).

6. Lag screw (1) according to any of the previous claims, wherein the transition between the conical surface (2a) and the threaded rod (3) is a second conical surface (4).

7. Lag screw (1) according to the previous claim, wherein said V-shaped slits (2b) extend between the smaller circle of the conical surface (2a) and at less than 1 mm of the maximum circle.

8. Lag screw (1) according to any of the previous claims, wherein the conical surface (2a) has an aperture of 90 ± 2°.
